# EUROPÄISCHE PATENTSCHRIFT

(11) **EP 0 416 293 B1**
(45) Veröffentlichungstag und Bekanntmachung des Hinweises auf die Patenterteilung: **22.09.1993**
(21) Anmeldenummer: 90114929.4
(22) Anmeldetag: 03.08.1990
(51) Int. Cl.: B62D 33/06, B60P 3/38

(54) **Fahrerhaus-Schlafliege-Aufhängung und Verriegelung**
Suspension and locking for a bunk in a driver's cab
Suspension et verrouillage d'une couchette pour cabine de camion

(30) Priorität: 07.09.1989 DE 3929784
(43) Veröffentlichungstag der Anmeldung: 13.03.1991
(73) Patentinhaber: MAN Nutzfahrzeuge Aktiengesellschaft, 80976 München (DE)
(72) Erfinder: Watzek, Gerhard, D-8000 München 45 (DE); Knecht, Stefan, D-8000 München 21 (DE)

(56) Entgegenhaltungen:
- EP-A- 0 218 902
- EP-A- 0 300 322
- DE-B- 2 640 895

## Beschreibung

Die Erfindung bezieht sich auf eine klappbare Schlafliege mit einer Verriegelungseinrichtung im Fahrerhaus eines Nutzfahrzeuges, insbesondere Lkw, wobei für die horizontale Gebrauchslage und für die hochgeklappte Staulage der Schlafliege unterschiedliche Fang- und Verriegelungssysteme vorgesehen sind.

Klappbare Schlafliegen mit Verriegelungsmechanismen sind in mannigfaltigen Ausführungsformen bekannt. Der Verriegelungsmechanismus bewirkt hier als ein einziges Element Ent- und Verriegeln der Schlafliege sowohl in der horizontalen Gebrauchslage wie auch in der vertikalen Staulage, wobei oft ergonomisch ungünstige Verhältnisse für das Handhaben der Verriegelungseinrichtung in Kauf genommen werden müssen.

Es ist eine Schlafliege nach der DE-B-26 40 895 bekannt, die durch Kippen um 180° aus der Gebrauchslage bis zur Anlage gegen die Decke des Fahrerhauses, mit der Oberseite nach unten weisend, hochgeklappt werden kann.

Der Erfindung liegt die Aufgabe zugrunde, eine leicht handhabbare Klapp-Schlafliege mit ergonomisch günstiger Anordnung der Verriegelungseinrichtung zu schaffen.

Dies wird erfindungsgemäß dadurch erreicht, daß ein Haken, ein Schnapper und ein federbeaufschlagter Bolzen wandseitig ortsfest und die Fang-einrichtungen an der Schlafliege, mit ihr verschwenkbar, angeordnet sind. Solcherart sind die passiven Teile an der schwenkbaren Schlafliege und die aktiven Teile an der ortsfesten Wandung des Fahrerhauses angeordnet, was eine einfachere Montage und Zugriff zu den komplizierten Teilen mit Federmechanismus gestattet.

Nach einer Ausgestaltung der Erfindung besteht die Fangvorrichtung für die Gebrauchslage aus einem seitlich der Schlafliege angeordneten, fest mit ihr verbundenen, U-förmigen, unten offenen Bügel, der mit einem wandseitigen Haken in Eingriff bringbar und von einem federbeaufschlagten Schnapper gehalten ist und die Fangeinrichtung für die hochgeklappte Staulage aus einem etwa in der Mitte der Liege befestigten Fangelement mit nach oben offenem Maul und einer Anlaufschräge, das mit einem wandseitig befestigten, federbeaufschlagten Bolzen in Eingriff bringbar ist, wobei der Bolzen in der Endstellung des Fangelementes in eine kreisrunde vertiefte Rast einfällt. Der erfinderische Effekt wird so mit sehr einfachen und preiswerten, zum Teil handelsüblichen Teilen erzielt. Nach einem weiteren Merkmal der Erfindung ist die Entriegelung des Bolzens aus der vertieften Rast mittels eines handbetätigten Zugelementes vorgesehen, das über eine im Seitenwandbereich, vorzugsweise in der Wand versenkten Klappe betätigbar ist. Das Zugelement ist über die Klappe leicht zu betätigen, und es genügt ein dosiertes Abstützen der unter ihrer Schwerkraft gedämpft nach unten schwenkenden Schlafliege, um sie in ihre horizontale Endstellung zu bringen.

In weiterer Ausbildung der Erfindung sind zur Unterstützung des Ausschwenkens der Schlafliege Gasfedern oder dergleichen vorgesehen. Auf diese Weise braucht für das Anheben der Schlafliege nur eine sehr geringe Kraft aufgewendet zu werden.

Die Erfindung ist in einem Ausführungsbespiel dargestellt und beschrieben.

Es zeigen:
- Fig. 1: eine hochklappbare Schlafliege in der Seitenansicht,
- Fig. 2: eine hochklappbare Schlafliege in ihrer Staulage, ausschnittweise in der Vorderansicht,
- Fig. 3: eine Einzelheit der hochklappbaren Schlafliege (Vorderansicht).

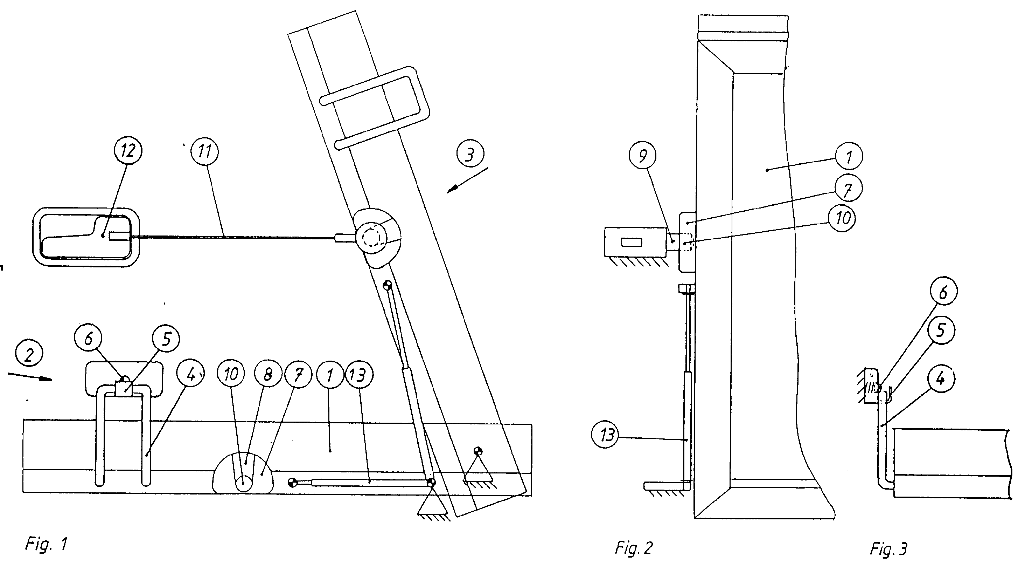

Fig. 1 zeigt eine klappbare Schlafliege in ihren beiden Endstellungen, nämlich der horizontalen Gebrauchslage und der annähernd vertikalen Staulage. Für Gebrauchslage und Staulage sind unterschiedliche Verriegelungssysteme vorgesehen. Für die Arretierung in der horizontalen Staulage ist eine Fangeinrichtung 2 vorgesehen, die im wesentlichen aus einem unten offenen, U-förmigen Bügel 4 besteht, der fest an der Schlafliege 1 angeordnet und mit einem ortsfest, wandseitig befestigten Haken 5 und federbeaufschlagtem Schnapper 6 im Eingriff steht. Soll die Schlafliege 1 nun in die Staulage gebracht werden, so wird sie, die geringe Schnapper-Haltekraft überwindend, leicht angehoben, wobei das Anheben dann noch wesentlich durch den Druck der Gasfedern 13 unterstützt wird. Zum Erreichen der Staulagen-Endposition läuft das an der Liegenaußenseite fest angebrachte Fangelement 7 mit seinem trichterförmigen Maul und Anlaufschräge 8 an den wandseitig fest angeordneten, federbeaufschlagten Bolzen 9 auf, um in der Endposition in die vertiefte Rast 10 einzufallen. Somit ist die Schlafliege 1 optimal gegen Herabfallen gesichert. Entriegelt werden kann dann die Schlafliege über die in Fahrer- oder Beifahrernähe befindliche Klappe 12, die das auf den federbeaufschlagten Bolzen 9 wirkende Zugelement 11 betätigt, worauf die Liege gegen den abgestimmten Druck der Gasfedern 13 sanft in die horizontale Gebrauchslage abgesenkt werden kann.

### Bezugszeichenliste

- 1: klappbare Schlafliege
- 2: Fangeinrichtung
- 3: Fangeinrichtung
- 4: U-förmiger Bügel
- 5: wandseitiger Haken
- 6: Schnapper
- 7: Fangelement
- 8: trichterförmiges Maul mit Anlaufschräge von 7
- 9: federbeaufschlagter Bolzen
- 10: vertiefte Rast
- 11: Zugelement
- 12: Klappe
- 13: Gasfeder

## Patentansprüche

1. Klappbare Schlafliege (1) mit einer Verriegelungseinrichtung im Fahrerhaus eines Nutzfahrzeuges, insbesondere Lkw, wobei für die horizontale Gebrauchslage und für die hochgeklappte Staulage der Schlafliege (1) unterschiedliche Fang- und Verriegelungssysteme (2, 3) vorgesehen sind, dadurch gekennzeichnet, daß ein Haken (5), ein Schnapper (6) und ein federbeaufschlagter Bolzen (9) wandseitig ortsfest und die Fangelemente (4, 7) an der Schlafliege (1), mit ihr schwenkbar, angeordnet sind.

2. Klappbare Schlafliege nach Anspruch 1, dadurch gekennzeichnet, daß die Fangeinrichtung (2) für die Gebrauchslage aus einem seitlich der Schlafliege (1) angeordneten, fest mit ihr verbundenen U-förmigen, unten offenen Bügel (4) besteht, der mit einem wandseitigen Haken (5) in Eingriff bringbar und von einem federbeaufschlagten Schnapper (6) gehalten ist und die Fangeinrichtung (3) für die hochgeklappte Staulage aus einem etwa in der Mitte der Liege befestigten Fangelement (7) mit nach oben offenem trichterförmigen Maul mit Anlaufschräge (8) besteht, das mit einem wandseitig befestigten, federbeaufschlagten Bolzen (9) in Eingriff bringbar ist, wobei der Bolzen (9) in der Endstellung des Fangelementes (7) in eine kreisrunde, vertiefte Rast (10) einfällt.

3. Klappbare Schlafliege nach Anspruch 1 oder 2, dadurch gekennzeichnet, daß die Entriegelung des Bolzens (9) aus der vertieften Rast (10) mittels eines handbetätigbaren Zugelementes (11) vorgesehen ist, das über eine im Seitenwandbereich des Fahrerhauses, vorzugsweise in der Wand versenkten Klappe (12) betätig bar ist.

4. Klappbare Schlafliege nach den Ansprüchen 1 bis 3, dadurch gekennzeichnet, daß zur Unterstützung des Ausschwenkens der Schlafliege (1) Gasfedern (13) oder oder derleichen vorgesehen sind.

## Claims

1. Folding bunk (1) with a locking device in the cab of a commercial vehicle, particularly a truck, with different retaining and locking systems (2,3) for the horizontal utilisation and the folded vertical storage position of the bunk, characterised in that a hook (5), a snapping device (6) and a spring-loaded pin (9)are mounted on the wall in a stationary manner and that the retaining elements (4,7) are mounted on the bunk (1) and can be slewed with the latter.

2. Folding bunk as under Claim 1, characterised in that the retaining device (2) for the utilisation position consists of a U-shaped bow (4) whose open end faces downwards, which bow is laterally attached to and firmly connected with the bunk (1) and can be engaged with a hook (5) mounted on the wall and is retained by a spring-loaded snapping device (6), and in that the retaining device (3) for the folded vertical storage position consists of a retaining element (7) which is mounted approximately in the centre of the bunk and has a funnel-shaped jaw with the opening facing upwards and sloping sides (8), which jaw can be engaged with a spring-loaded pin (9) mounted on the wall, the pin (9) locking into place in a circular, recessed detent (10) when the retaining element (7) has reached its final position.

3. Folding bunk as under Claim 1 or 2, characterised in that pin (9) is disengaged from the recessed detent (10) by means of a manually operated pull element (11) that is operated from a flap (12) recessed into the lateral cab wall area, preferably in the wall.

4. Folding bunk as under one of the Claims 1 to 3, characterised in that gas springs (13) or similar devices are fitted to support slewing of the bunk (1).

## Revendications

1. Couchette relevable (1) avec un dispositif de verrouillage dans la cabine de conducteur d'un véhicule utilitaire, notamment d'un camion, dans laquelle il est prévu pour la position horizontale d'utilisation et pour la position relevée de retenue de la couchette (1), des systèmes d'arrêt et de verrouillage (2, 3) différents, couchette caractérisée en ce qu'un crochet (5), un mécanisme à déclic (6) et un goujon (9), sollicité par un ressort, sont disposés à poste fixe côté paroi, tandis que les éléments d'arrêt (4, 7) sont disposés sur la couchette et peuvent pivoter avec elle.

2. Couchette relevable selon la revendication 1, caractérisée en ce que le dispositif d'arrêt (2) pour la position d'utilisation est constitué par un étrier (4) en forme de U, ouvert vers le bas, disposé sur le côté de la couchette et solidaire de celle-ci, et qui est susceptible d'être amené en prise avec un crochet (5) côté paroi et est maintenu par un mécanisme à déclic (6), tandis que le dispositif d'arrêt (3) pour la position relevée est constitué par un élément d'arrêt (7) fixé à peu près au milieu de la couchette, avec une embouchure en forme d'entonnoir ouverte vers le haut, avec un biseau d'arrêt (8) qui est susceptible d'être amené en prise avec un goujon (9), sollicité par un ressort et fixé côté paroi, et que ce goujon (9), dans la position finale de l'élément d'arrêt (7), s'engage dans un cran d'arrêt creux (10).

3. Couchette relevable selon la revendication 1 ou la revendication 2, caractérisée en ce que le déverrouillage du goujon (9) à partir du cran d'arrêt creux (10) est prévu au moyen d'un élément de traction (11) susceptible d'être actionné manuellement, et qui peut être actionné par l'intermédiaire d'un volet (12) placé sur la paroi latérale de la cabine du conducteur, en étant de préférence noyé dans la paroi.

4. Couchette relevable selon les revendications 1 à 3, caractérisée en ce que pour soutenir le rabattement de la couchette (1), il est prévu des ressorts pneumatiques (13) ou des organes analogues.
